# DEMANDE DE BREVET EUROPEEN

(11) **EP 4 779 581 A1**
(43) Date de publication de la demande: **22.07.2026**
(21) Numéro de dépôt: 26151908.6
(22) Date de dépôt: 14.01.2026
(51) Int. Cl.: G06V 10/426, G06V 10/86, G06V 10/46

(54) **PROCÉDÉ D'ANALYSE D'UNE IMAGE DE PIXELS**

(30) Priorité: 15.01.2025 FR 2500403
(71) Demandeur: Tran, Michel, 95400 Villiers-le-bel (FR)
(72) Inventeur: Tran, Michel, 95400 Villiers-le-bel (FR)
(74) Mandataire: Gevers & Orès

(57) **Abrégé**

Le procédé d'analyse comporte : - une recherche (102) de blobs (B204 - B222) dans l'image (IMG) ; - une recherche (104), pour chaque blob (B204 - B222), pour chacune de plusieurs relations topologiques prédéfinies, d'un ou plusieurs blobs ayant cette relation topologiques prédéfinies avec le blob considéré ; et - une construction (106) d'un graphe relationnel (G) comportant : des nœuds représentant respectivement les blobs (B204 - B222) trouvés, et des liaisons, chaque liaison liant deux nœuds et indiquant la relation topologique entre les deux blobs représentés par les deux nœuds liés.

## Description

### Domaine technique de l'invention

La présente invention concerne un procédé d'analyse d'une image de pixels, un procédé de reconnaissance d'un objet dans une image de pixels, un procédé de vidéosurveillance, un procédé de détermination de graphes de référence et un programme d'ordinateur.

### Arrière-plan technologique

La reconnaissance d'objet est une tâche importante dans le domaine de la vision par ordinateur et de l'intelligence artificielle. Elle consiste à identifier et à localiser des objets dans une image ou une vidéo. Au fil des années, cette discipline a connu des progrès significatifs, en grande partie grâce aux avancées dans les réseaux de neurones convolutifs (CNN) et d'autres techniques d'apprentissage profond.

Cependant, un réseau de neurones est un système complexe dont l'entraînement nécessite une grande quantité de données d'entraînement et une très grande capacité de calcul. En outre, une fois entraîné, le fonctionnement interne du réseau de neurones est difficile à comprendre.

Il peut ainsi être souhaité de prévoir un procédé d'analyse d'une image de pixels, qui permette de s'affranchir d'au moins une partie des problèmes et contraintes précités.

### Résumé de l'invention

Il est donc proposé un procédé d'analyse d'une image de pixels selon la revendication 1.

Grâce à l'invention, il est possible de représenter les objets présents dans l'image par des sous-graphe du graphe relationnel, ce qui est une manière simple de représenter les objets, tout en étant indépendante des déformations de l'objet : taille, orientation, etc.

L'invention peut en outre comporter l'une ou plusieurs des caractéristiques optionnelles des revendications 2 à 5, selon toute combinaison techniquement possible.

Il est également proposé un procédé d'analyse de plusieurs images successives de pixels selon la revendication 6, avec des caractéristiques optionnelles selon les revendications 7 et 8.

Il est également proposé un procédé de reconnaissance d'un objet dans une image de pixels, selon la revendication 9.

Il est également proposé un procédé de reconnaissance d'un objet dans une suite d'images de pixels, selon la revendication 10.

Il est également proposé un procédé de vidéosurveillance, selon la revendication 11.

Il est également proposé un procédé de détermination de graphes de référence, selon la revendication 12.

Il est également proposé un programme d'ordinateur selon la revendication 13.

Il est également proposé un dispositif d'analyse d'une image de pixels, selon la revendication 14.

### Brève description des figures

L'invention sera mieux comprise à l'aide de la description qui va suivre, donnée uniquement à titre d'exemple et faite en se référant aux dessins annexés dans lesquels :
- la figure 1 est un schéma bloc d'un procédé d'analyse d'une image de pixels,
- la figure 2 est un exemple d'image de pixels,
- la figure 3 illustre le résultat d'une recherche de blobs dans l'image de la figure 2,
- la figure 4 illustre les différents blobs trouvés dans l'image de la figure 2,
- la figure 5 est un graphe relationnel des blobs de la figure 4,
- la figure 6 est un schéma bloc d'un procédé de reconnaissance d'un objet dans une image de pixels,
- la figure 7 comporte deux graphes relationnels issus de respectivement deux images successives,
- la figure 8 est un sous-graphe commun aux graphes relationnels de la figure 7,
- la figure 9 illustre une première itération de regroupement du sous-graphe de la figure 8,
- la figure 10 illustre une deuxième itération de regroupement,
- la figure 11 illustre une troisième itération de regroupement,
- la figure 12 est un graphe hiérarchique représentant les regroupements effectués,
- la figure 13 illustre un procédé de reconnaissance,
- la figure 14 une représentation schématique d'une installation de vidéosurveillance,
- la figure 15 est un schéma bloc d'un procédé de vidéosurveillance,
- la figure 16 est un schéma bloc d'un procédé de détermination de graphes de référence pour un graphe relationnel,
- la figure 17 est un schéma bloc d'un procédé de détermination de graphes de référence pour un graphe hiérarchique, et
- la figure 18 est une représentation schématique d'un système informatique pour la mise en œuvre d'un ou plusieurs des procédés des figures 1, 6, 13, 15, 16 et 17.

### Description détaillée de l'invention

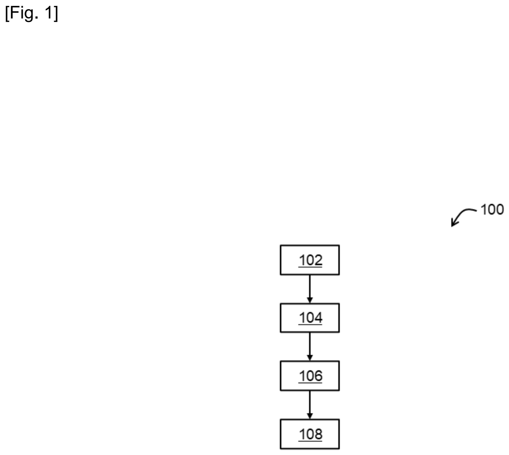

En référence à la figure 1, un exemple de procédé d'analyse 100 selon l'invention, va à présent être décrit. Le procédé d'analyse 100 de préférence implémenté par un algorithme déterministe.

Le procédé d'analyse 100 est destiné à analyser une image IMG de pixels représentant une scène. Chaque pixel, sauf les pixels de bord de l'image IMG, présente ainsi huit voisins.

L'image IMG peut être une image monospectrale, par exemple en niveau de gris, auquel cas chaque pixel est associé à une valeur, représentant une intensité dans une bande de fréquence. L'image IMG peut aussi être une image multispectrale, par exemple Rouge-Vert-Bleu, auquel cas chaque pixel est associé à plusieurs valeurs associées à des intensités dans respectivement autant de bandes de fréquence.

L'image IMG peut par exemple avoir été acquise par un dispositif d'acquisition, par exemple caméra ou bien appareil photo, embarqué dans n'importe quelle machine, comme un drone, un satellite, un robot ou bien une voiture autonome, ou bien déployé dans un espace public ou privé.

Au cours d'une étape 102, des blobs B sont recherchés dans l'image IMG. Comme cela est connu en soi, un blob est une région de l'image IMG (c'est-à-dire un groupe de pixels formant une zone continue de l'image IMG) dans laquelle certaines propriétés des pixels sont constantes ou approximativement constantes. Tous les pixels d'un même blob peuvent ainsi être considérés comme similaires les uns aux autres. Par exemple, lorsque l'image IMG est monospectrale, les pixels d'un même blob présentent des valeurs proches les unes des autres, par exemple comprises dans un intervalle de taille prédéfinie. Lorsque l'image IMG est multispectrale, pour chaque bande spectrale, les valeurs des pixels dans cette bande spectrale sont proches les unes des autres, par exemples comprises dans un intervalle de taille prédéfinie. Lorsque l'image IMG est multispectrale, elle peut être traitée comme plusieurs images monospectrales. Les blobs de l'image IMG occupent des régions différentes de l'image IMG, de sorte que les blobs ne peuvent pas se chevaucher.

Différentes techniques connues peuvent être utilisées pour rechercher des blobs dans l'image IMG comme le Laplacien du Gaussien (de anglais « Laplacian of Gaussian » également désigné par le sigle LoG), la différence des Gaussiens (de l'anglais « Difference of Gaussians » également désigné par le sigle DoG), le déterminant du Hessien (de l'anglais « Determinant of Hessian » également désigné par le sigle DoH), les régions d'extremum stable maximal (de l'anglais « Maximally stable extremal regions », ou bien, par exemple, la technique décrite dans le brevet européen EP 2 677 464 B1.

Les techniques de recherche de blobs, en particulier celles mentionnées ci-dessus, n'utilisent pas de pixels de contour optimum, c'est-à-dire définissant un contour délimitant les blobs les uns des autres ayant une épaisseur d'un seul pixel. Dit autrement, un pixel de contour optimum est adjacent à au moins deux blobs.

De préférence, la recherche de blobs comporte une recherche de pixels de contour optimum. Différentes techniques connues peuvent être utilisées pour rechercher les pixels contours.

Par exemple, la méthode de recherche de pixels de contour décrite dans le brevet chinois CN107220988B est utilisée. Dans ce cas, les étapes suivantes sont réalisées.

Tout d'abord, pour chaque pixel P, on calcule l'amplitude de variation V(P) de ce pixel P par rapport à ses huit voisins. Cette amplitude de variation V(P) est égale à : V(P) = V_{horizontale} + V_{verticale} + V_{diagonale gauche} + V_{diagonale droite}, où V_{horizontale} est l'amplitude de variation dans la direction horizontale, V_{verticale} est l'amplitude de variation dans la direction verticale, V_{diagonale gauche} est l'amplitude de variation dans une direction de 45°, et V_{diagonale droite} est l'amplitude de variation dans une direction de 135°.

Ensuite, pour chaque pixel P, on détermine si l'amplitude de variation V(P) est maximale suivant au moins une des quatre directions possibles avec ses voisins (la direction horizontale, la direction verticale et les deux directions diagonales). Si c'est le cas, le pixel P considéré est un pixel de contour optimum. Ainsi, un pixel de contour optimum est un pixel présentant un maximum de variation par rapport à ses pixels voisins.

Une fois tous les pixels de contour optimum déterminés dans l'image IMG, les blobs sont formés par les groupes de pixels délimités par les pixels de contour optimum. De préférence, les pixels de contour sont exclus des blobs, c'est-à-dire qu'ils ne font ainsi partie d'aucun blob.

Avec cette technique de recherche des pixels de contour optimum, un ou plusieurs des avantages suivants peuvent être obtenus :
- Précision : La région détectée représente exactement la structure de l'objet ;
- Taille adéquate : La détection correspond à la taille attendue de l'objet ou de la caractéristique ciblée ;
- Position correcte : Le blob est bien centré ou aligné avec l'objet qu'il représente ; et
- Robustesse : La détection est stable et résistante au bruit, aux variations d'échelle, d'orientation ou d'éclairage.

Au cours d'une étape 104, le ou les blobs présentant une taille inférieure à un seuil sont exclus. La taille d'un blob est par définition le nombre de pixels que ce blob regroupe. Le seuil est par exemple égal à un nombre prédéfini de pixels dans l'image.

Au cours d'une étape 106, des relations d'adjacence et d'inclusion entre les blobs sont recherchées. Par exemple, deux blobs sont adjacents lorsqu'une partie seulement des pixels de contour d'un premier de ces deux blobs sont également des pixels de contour de l'autre des deux blobs. Par exemple également, deux blobs sont inclus l'un dans l'autre lorsque tous les pixels de contour d'un premier de ces deux blobs sont également les pixels de contour de l'autre des deux blobs.

Au cours d'une étape 108, un graphe relationnel G est construit. Ce graphe relationnel G comporte tout d'abord des nœuds B représentant respectivement les blobs B. Le graphe relationnel G comporte en outre des liaisons L, chaque liaison reliant deux blobs représentant une relation topologique, parmi des relations topologiques prédéfinies, entre les deux blobs. Par exemple, la liaison peut être de deux types : un premier type indiquant que les deux blobs représentés par les deux nœuds B liés sont adjacents l'un à l'autre, et un deuxième type indiquant que les deux blobs représentés par les deux nœuds B liés sont inclus l'un dans l'autre.

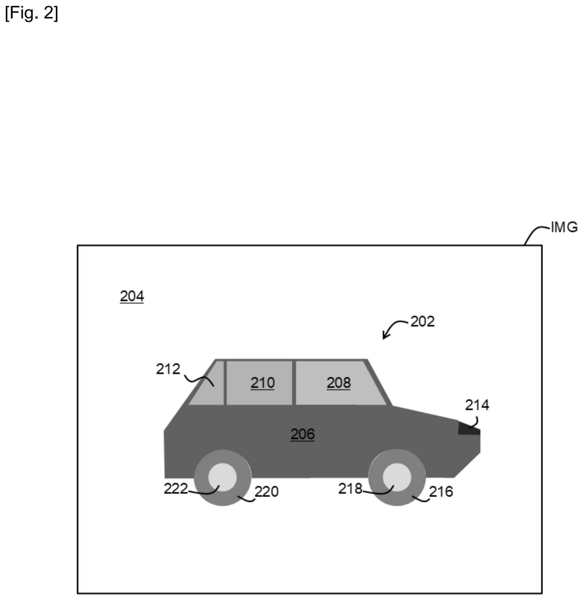

En référence aux figures 2 à 5, un exemple de mise en œuvre du procédé d'analyse 100 va à présent être décrit.

En référence à la figure 2, l'image IMG représente une voiture 202 sur un arrière-plan 204. Comme cela est visible, la voiture 202 comporte plusieurs éléments : une carrosserie 206, une vitre avant 208, une vitre milieu 210, une vitre arrière 212 un phare 214, une roue avant 216, une jante avant 218, une roue arrière 220 et une jante arrière 222. Dans l'image IMG, chacun de ces éléments est illustré par une zone colorée en gris, à des niveaux différents d'une zone à l'autre.

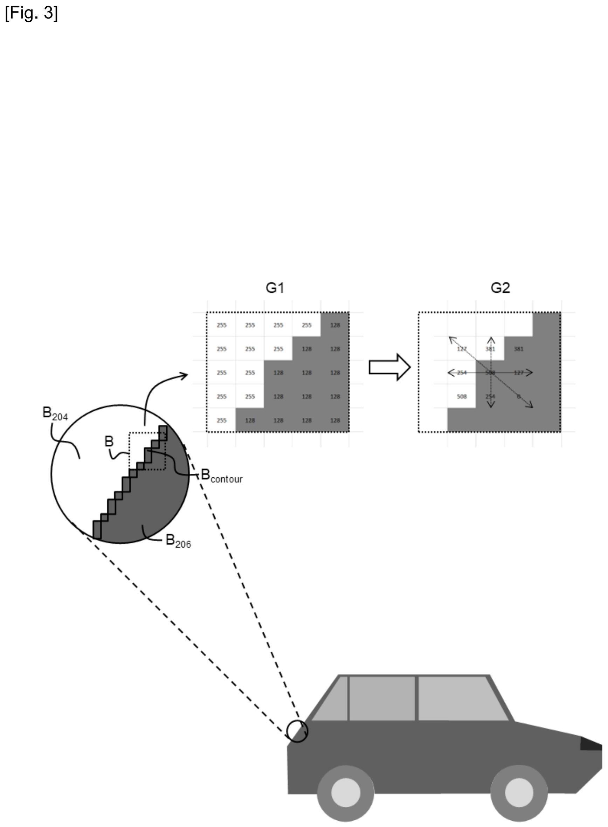

En référence à la figure 3, à l'issue de l'étape 102 de recherche de blobs, deux blobs B₂₀₆, B₂₀₄ sont notamment trouvés, respectivement pour la carrosserie 206 et l'arrière-plan 204.

Pour cela, la méthode décrite précédemment basée sur une recherche de pixels de contours optimum (entourés en traits pleins sur la figure 3) est par exemple utilisée. Pour illustrer cette méthode, la figure 3 illustre, dans une grille G, les valeurs des pixels d'un bloc B de 5x5 pixels et, pour le pixel central, les quatre directions possibles avec ses voisins, indiquées par des doubles flèches. Dans l'exemple illustré, l'amplitude de variation V(P) du pixel central P est maximale selon les quatre directions, et est donc sélectionné comme pixel de contour B_{contour}.

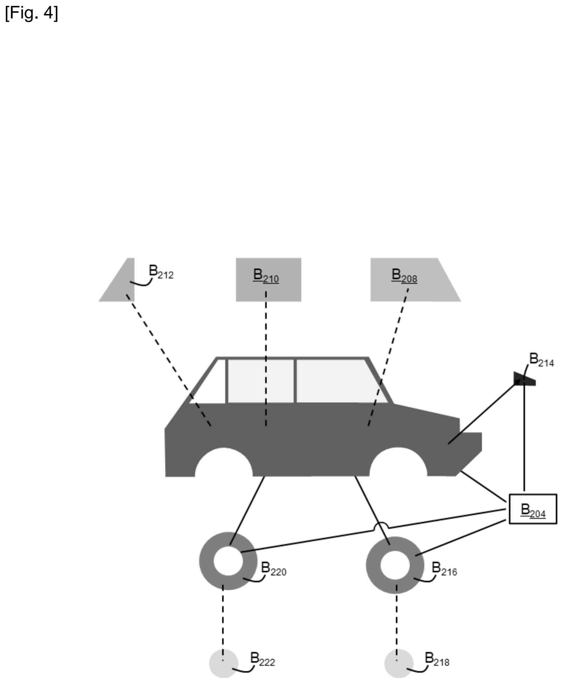

En référence à la figure 4, les blobs B204 - B222 de l'arrière-plan 204 et des éléments 206 - 222 sont illustrés avec leurs dépendances. De manière non limitative, un trait plein illustre une adjacence et un trait pointillé illustre une inclusion.

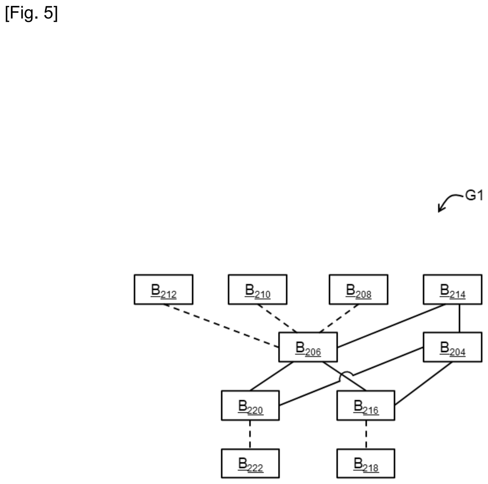

En référence à la figure 5, le graphe relationnel G obtenu à l'issue de l'étape 108 est illustré. À nouveau, de manière non limitative, un trait plein illustre une adjacence et un trait pointillé illustre une inclusion.

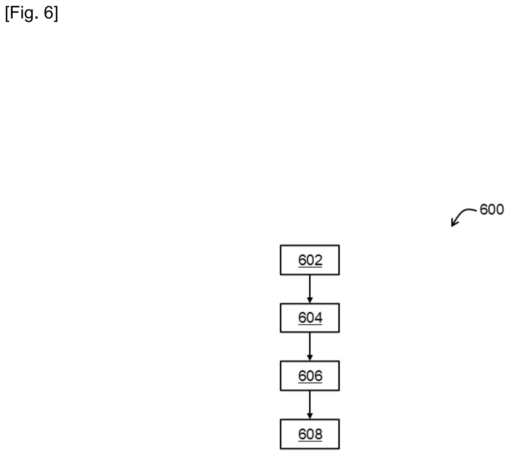

En référence à la figure 6, un procédé d'analyse 600 de plusieurs images successives d'une même scène, va à présent être décrit.

Au cours d'une étape 602, le procédé d'analyse 100 est mis en œuvre chacun des images successives, pour obtenir autant de graphes relationnels. Par exemple, les images sont prises par un même dispositif de capture d'image et séparées dans le temps par exemple d'au plus une seconde.

Au cours d'une étape 604, un sous-graphe SG commun aux graphes relationnels est déterminé.

Au cours d'une étape 606, en partant du sous-graphe, les nœuds sont regroupés de manière itérative dans des nouveaux nœuds N.

Pour cela, le ou les nœuds liés à un autre nœud par une liaison d'inclusion (ou toute autre relation topologique équivalente), sont regroupés, avec cet autre nœud, dans un nouveau nœud N.

En outre, le nœud ayant le plus de liaison est recherché et ce nœud est regroupé avec tous les autres nœuds auquel il est lié dans un nouveau nœud N.

Cela permet d'obtenir un graphe hiérarchique H comportant les blobs d'origine et les nœuds N, avec des liaisons représentant des relations topologiques résultant des regroupements effectués.

Ainsi, le graphe relationnel G constitue un premier niveau d'invariant topologique, exprimant la structure fondamentale de la scène au niveau des blobs (éléments primitifs) indépendamment de toute métrique géométrique, de toute échelle et de toute projection. Les relations portées par les liaisons L représentent des invariants d'adjacence et d'inclusion, lesquels demeurent stables sous toute transformation continue des données captées.

Le procédé de regroupement est appliqué de manière récursive, de sorte que chaque niveau hiérarchique engendre un invariant topologique de niveau supérieur, formant une chaîne d'invariants hiérarchiques imbriqués. Les nœuds N ainsi générés représentent successivement des régions, des surfaces, des objets, des ensembles d'objets, puis une représentation de la totalité de la scène.

Cette hiérarchie d'invariants topologiques permet une compression hiérarchique de la représentation du monde, signifiant qu'un nombre réduit de nœuds N au sommet du graphe hiérarchique suffit à représenter la structure complète de la scène, chaque nœud encapsulant implicitement les relations topologiques d'adjacence, d'inclusion et de connexité des niveaux inférieurs.

En outre, l'invariant hiérarchique du sommet ainsi formé permet une reconstruction bidirectionnelle de la scène, comprenant une reconstruction ascendante, par agrégation progressive des invariants locaux, et une reconstruction descendante, par distribution de l'information depuis les invariants hiérarchiques de plus haut niveau vers les invariants de plus bas niveau, permettant ainsi de reconstruire les caractéristiques locales de la scène.

Ainsi, le graphe hiérarchique d'invariants obtenu selon l'invention constitue un modèle du monde invariant hiérarchiquement, indépendant de la géométrie, apte à être utilisé pour la perception, la compréhension, la compression et le raisonnement sur des scènes, quelles que soient les transformations géométriques ou les modalités de captation mises en œuvre.

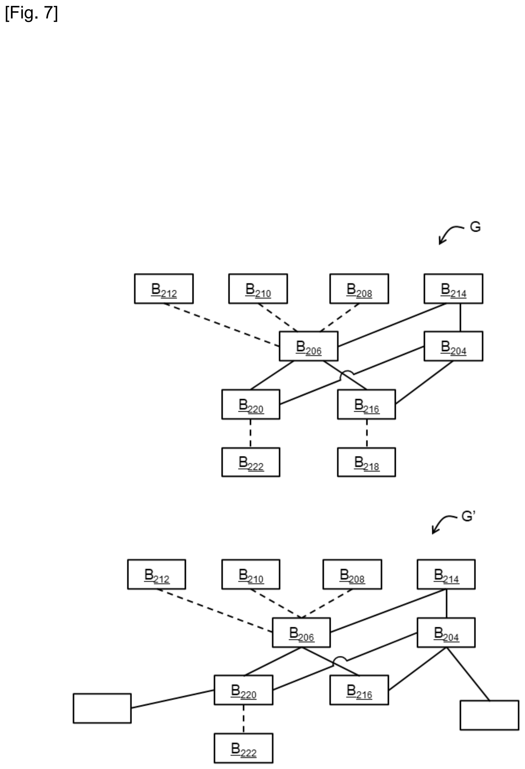

En référence aux figures 7 à 12, un exemple de mise en œuvre du procédé 600 va à présent être décrit.

La figure 7 illustre le graphe relationnel G de la figure 5 avec un autre graphe relationnel G' obtenu pour une autre image de la même scène.

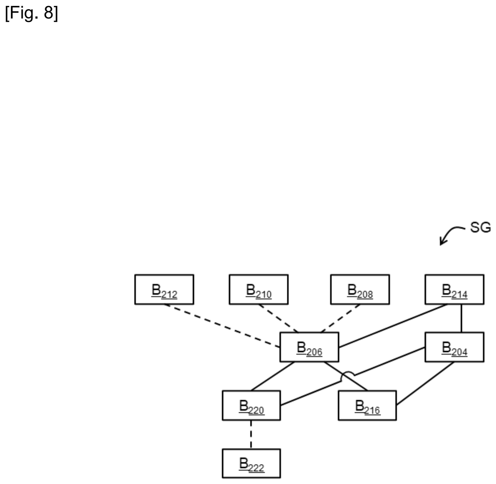

La figure 8 illustre le sous-graphe SG commun aux graphes G, G'. Le sous-graphe SG constitue un premier niveau d'invariant topologique décrivant la structure du véhicule.

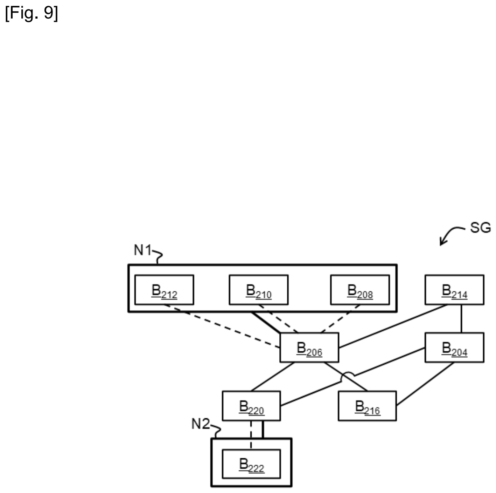

La figure 9 illustre une première itération de regroupement. Dans cette première itération, les nœuds B208, B210, B212 sont regroupés avec le nœud B206 dans lequel ils sont inclus pour former le nouveau nœud N1. En outre, le nœud B222, est regroupé avec le nœud B220 dans lequel il est inclus pour former le nouveau nœud N2. Les nouveaux nœuds N1, N2 sont liés aux autres nœuds par des liaisons, dites liaisons de connexité topologique, représentées en gras, correspondant aux liaisons avant regroupement.

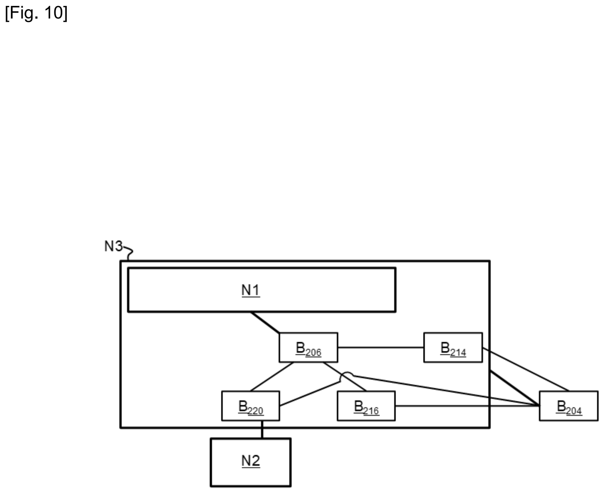

La figure 10 illustre une deuxième itération de regroupement. Dans cette deuxième itération, le nœud B206 est trouvé comme celui avec le plus de liaisons, et il est donc regroupé avec les nœuds auxquels il est lié, pour former le nouveau nœud N3.

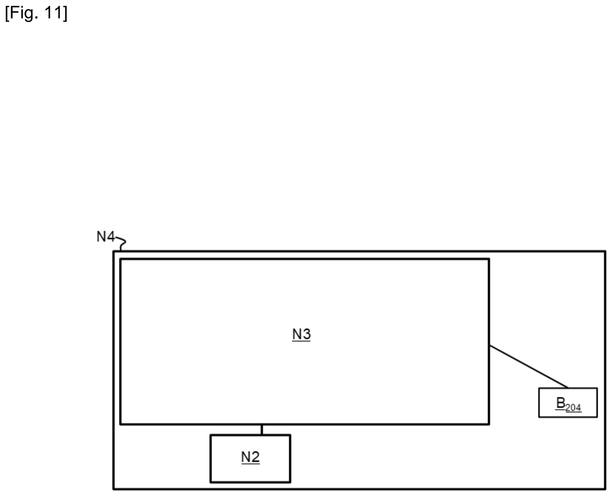

La figure 11 illustre une troisième itération de regroupement. Dans cette troisième itération, le nœud N3 est trouvé comme celui avec le plus de liaisons, et il est donc regroupé avec les nœuds auxquels il est lié, pour former le nouveau nœud N4.

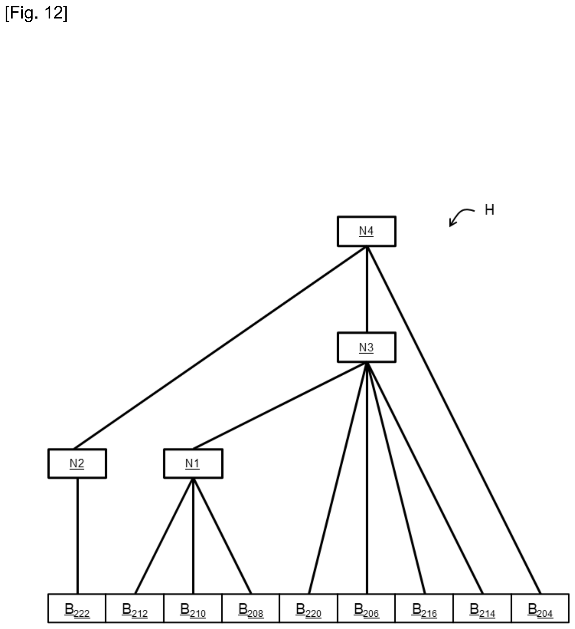

La figure 12 illustre le graphe hiérarchique H obtenu.

Ainsi, dans l'exemple illustré sur les figures, les nœuds B208, B210, B212 correspondant aux vitres et au pare-brise, toutes incluses dans la carrosserie (blob B206), sont regroupées pour former un nœud N1 représentant une surface vitrée du véhicule. Par regroupements successifs, un nœud de niveau supérieur (c'est-à-dire obtenu à chaque nouvelle itération) est formé afin de représenter une structure centrale comprenant la carrosserie et les éléments fonctionnels qui lui sont adjacents ou inclus, tels que les phares et les surfaces vitrées. Chaque nœud hiérarchique ainsi créé constitue un invariant hiérarchique, résumant la structure topologique des nœuds de niveau inférieur qu'elle regroupe, indépendamment de toute description géométrique. Comme expliqué précédemment, le regroupement est appliqué de manière récursive jusqu'à la formation d'un nœud au sommet (le nœud N4 dans les figures), lequel regroupe l'ensemble des relations d'adjacence, d'inclusion et de connexité des nœuds correspondant au véhicule. Ce nœud N4 au sommet constitue un invariant hiérarchique du véhicule.

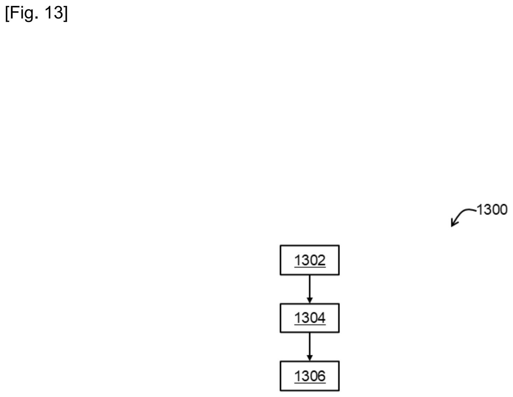

En référence à la figure 13, un exemple de procédé de reconnaissance 1300 selon l'invention va à présent être décrit. Le procédé de reconnaissance 1300 est destiné à reconnaitre, c'est-à-dire identifier, un objet dans une ou plusieurs images de pixels.

Au cours d'une étape 1302, l'image est analysée au moyen du procédé d'analyse 100, pour obtenir un graphe relationnel, ou bien, dans le cas de plusieurs images successives, les images sont analysées au moyen du procédé d'analyse 600 pour obtenir un graphe hiérarchique.

Au cours d'une étape 1304, le graphe relationnel G ou le graphe hiérarchique H est comparé avec des graphes de référence respectivement caractéristiques d'objets, pour déterminer si le graphe relationnel ou le graphe hiérarchique comporte un sous-graphe similaire à l'un des graphes de référence. Un sous-graphe est similaire à l'un des graphes de référence lorsque qu'il présente un taux prédéfini (par exemple 50% ou 90%) de liaisons identiques avec le graphe de référence.

Au cours d'une étape 1306, le graphe relationnel ou le graphe hiérarchique est associé à l'objet caractérisé par le graphe de référence. Ainsi, cet objet a été reconnu comme étant présent dans l'image ou dans la suite d'images, où il est représenté par les blobs du graphe relationnel.

La reconnaissance d'objet est ainsi réalisée par simple comparaison de graphes sans recours à la forme, à la taille, à la position ou à l'orientation des éléments composant l'objet. La structure hiérarchique topologique demeure stable quelles que soient les transformations géométriques, les variations de point de vue ou les déformations continues affectant les données captées.

Ainsi, le procédé selon l'invention permet de reconnaître un objet (comme un véhicule dans l'exemple illustré) en tant qu'objet cohérent à partir de la seule organisation topologique de ses composants, ladite organisation étant exprimée sous la forme d'un graphe relationnel ou d'un graphe hiérarchique d'entités topologiques constituant un modèle du monde invariant hiérarchiquement.

La reconnaissance du véhicule est ainsi effectuée par correspondance d'invariants hiérarchiques, la correspondance portant sur la structure des relations topologiques entre entités hiérarchiques, indépendamment des différences d'apparence, de couleur, de taille, d'orientation ou de projection entre les images analysées.

Ainsi, le procédé permet la reconnaissance robuste d'un véhicule à travers plusieurs images ou scènes distinctes, sans recours à des descripteurs géométriques explicites ni à un apprentissage préalable fondé sur des exemples visuels exhaustifs.

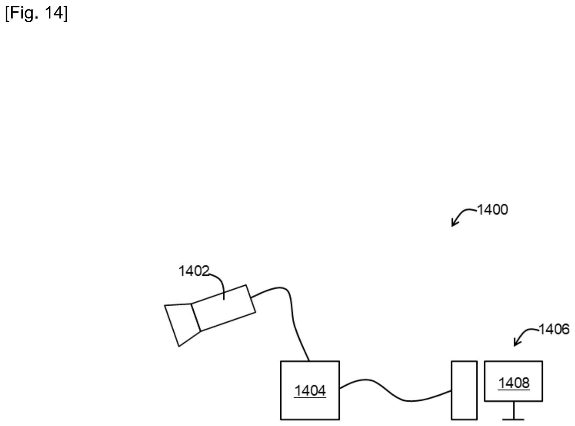

En référence à la figure 14, un exemple d'installation de vidéosurveillance 1400 dans laquelle l'invention est mise en œuvre, va à présent être décrite.

L'installation de vidéosurveillance 1400 comporte tout d'abord un dispositif d'acquisition d'image 1402, comme une caméra conçue pour acquérir une suite d'images.

L'installation de vidéosurveillance 1400 comporte en outre un dispositif de vidéosurveillance 1404 conçu pour mettre en œuvre le procédé de reconnaissance 1300 sur une ou plusieurs images successives fournies par le dispositif d'acquisition d'image 1402. Le dispositif de vidéosurveillance 1404 est en outre conçu pour vérifier si l'objet reconnu fait partie d'une liste prédéfinie d'objets, et, si c'est le cas, envoyer une alerte.

L'installation de vidéosurveillance 1400 comporte en outre un dispositif de vérification 1406 conçu pour recevoir l'alerte et la présenter à un opérateur humain. Par exemple, l'alerte comporte l'image où l'objet a été reconnu, et le dispositif de vérification 1406 comporte un dispositif d'affichage 1408 où l'image est affichée.

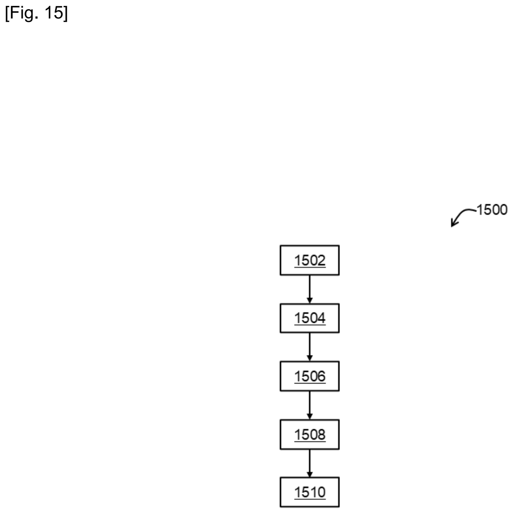

En référence à la figure 15, un exemple de procédé de vidéosurveillance 1500 selon l'invention, va à présent être décrit.

Au cours d'une étape 1502, le dispositif d'acquisition d'image 1402 prend une image ou plusieurs images successives et la/les transmet au dispositif de vidéosurveillance 1404.

Au cours d'une étape 1504, le dispositif de vidéosurveillance 1404 reçoit la ou les image.

Au cours d'une étape 1506, le dispositif de vidéosurveillance 1404 met en œuvre le procédé de reconnaissance 1300, pour obtenir un graphe relationnel ou le graphe hiérarchique associé à un objet.

Au cours d'une étape 1508, le dispositif de vidéosurveillance 1404 vérifie si l'objet reconnu fait partie d'une liste prédéfinie d'objets, et, si c'est le cas, envoie une alerte au dispositif de vérification 1406.

Au cours d'une étape 1510, le dispositif de vérification 1406 reçoit l'alerte et la présente à un opérateur humain.

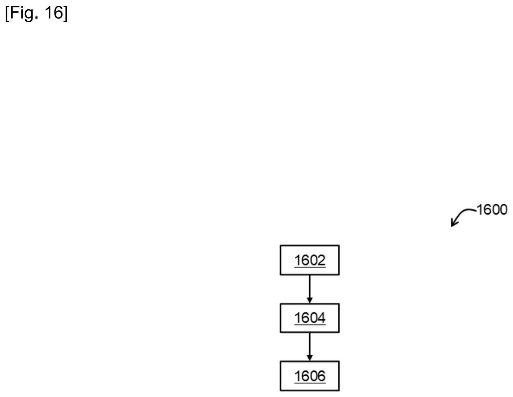

En référence à la figure 16, un exemple de procédé 1600, selon l'invention, de détermination de graphes de référence destinés à être comparés à un graphe relationnel, va à présent être décrit.

Au cours d'une étape 1602, chacune de plusieurs images initiales de pixels est analysée au moyen du procédé d'analyse 100, pour obtenir des graphes relationnels.

Au cours d'une étape 1604, des sous-graphes communs à une proportion prédéfinie des graphes relationnel sont recherchés. Par exemple, la proportion prédéfinie est de 50%. Ainsi, un sous-graphe présent dans 50% des graphes relationnels sera retenu.

Les sous-graphes ainsi trouvés sont pris comme graphes de référence.

Au cours d'une étape 1606, chaque graphe de référence est associé à un objet. Par exemple, les blobs d'un des graphes relationnels comportant ce graphe de référence est affiché à un opérateur humain qui entre alors le nom de l'objet représenté. Alternativement, les images initiales incluent des images déjà indexées, c'est-à-dire déjà associées à un objet, par exemple récupérées d'Internet. Dans ce cas, cet objet est associé automatiquement au graphe de référence identifié dans le graphe relationnel de l'image indexée.

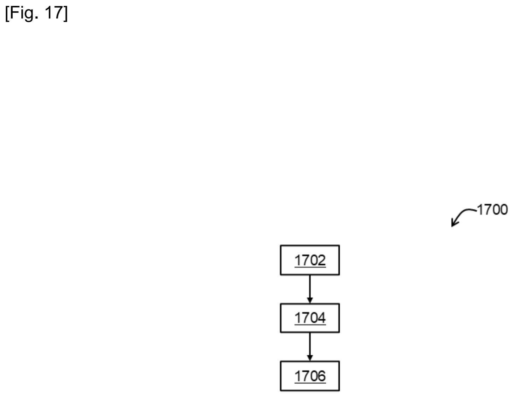

En référence à la figure 17, un exemple de procédé 1700, selon l'invention, de détermination de graphes de référence destinés à être comparés à un graphe hiérarchique, va à présent être décrit.

Au cours d'une étape 1702, plusieurs suites d'images initiales de pixels sont analysées au moyen du procédé d'analyse 600, pour obtenir des graphes hiérarchiques.

Au cours d'une étape 1704, des sous-graphes communs à une proportion prédéfinie des graphes hiérarchiques sont recherchés. Par exemple, la proportion prédéfinie est de 50%. Ainsi, un sous-graphe présent dans 50% des graphes hiérarchique sera retenu.

Les sous-graphes ainsi trouvés sont pris comme graphes de référence.

Au cours d'une étape 1706, chaque graphe de référence est associé à un objet. Par exemple, les blobs d'un des graphes hiérarchiques comportant ce graphe de référence sont affichés à un opérateur humain qui entre alors le nom de l'objet représenté. Alternativement, les suites d'images initiales incluent des images déjà indexées, c'est-à-dire déjà associées à un objet, par exemple récupérées d'Internet. Dans ce cas, cet objet est associé automatiquement au graphe de référence identifié dans le graphe hiérarchique de la suite d'images indexée.

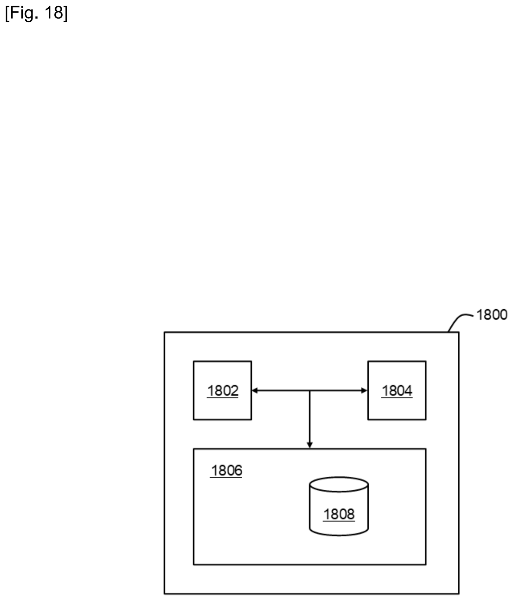

En référence à la figure 18, un système informatique 1800 pour la mise en œuvre d'un ou plusieurs des procédés 100, 600, 1300, 1600 et 1700 précédents va à présent être décrit plus en détail. Le système informatique 1800 peut en particulier être utilisé comme dispositif de vidéosurveillance 1404 et/ou dispositif de vérification 1406.

Le système informatique 1800 comporte une unité de traitement 1802 de données (telle qu'un microprocesseur) et une mémoire principale 1804 (telle qu'une mémoire RAM, de l'anglais « Random Access Memory ») accessible par l'unité de traitement 1802. Le système informatique 1800 comporte en outre par exemple une interface réseau et/ou un support lisible par ordinateur, comme par exemple un support local 1806 (tel qu'un disque dur local) ou bien un support distant (tel qu'un disque dur distant et accessible via par l'interface réseau au travers d'un réseau de communication) ou bien encore un support amovible (tel qu'une clé USB, de l'anglais « Universal Serial Bus », ou bien un CD, de l'anglais « Compact Disc » ou bien un DVD, de l'anglais « Digital Versatile Disc ») lisible au moyen d'un lecteur approprié du système informatique 1800 (tel qu'un port USB ou bien un lecteur de disque CD et/ou DVD). Un programme d'ordinateur 1808 contenant des instructions pour l'unité de traitement 1002 est enregistré de manière non transitoire sur le support local 1806 et/ou téléchargeable via l'interface réseau. Ce programme d'ordinateur 1808 est par exemple destiné à être chargé dans la mémoire principale 1804, afin que l'unité de traitement 1802 exécute ses instructions, pour mettre en œuvre l'un ou plusieurs des procédés 100, 600, 1300, 1600 et 1700.

Alternativement, tout ou partie des étapes de ces procédés pourrait être implémenté par des modules matériels, c'est-à-dire sous forme d'un circuit électronique, par exemple micro-câblé, ne faisant pas intervenir de programme d'ordinateur.

En conclusion, il sera apprécié que le graphe hiérarchique permet d'obtenir une chaîne d'invariants hiérarchiques imbriqués, représentant successivement des régions, des surfaces, des objets, des ensembles d'objets et une scène globale. Le graphe hiérarchique d'invariants topologiques constitue ainsi un invariant hiérarchique représentant la structure complète et stable de la scène, indépendamment de toute projection 2D, 3D, sphérique ou multi-vues. La hiérarchie d'invariants topologiques permet une compression hiérarchique de la représentation du monde, en ce qu'un nombre réduit de nœuds au sommet suffisent à représenter la structure complète de la scène. La hiérarchie d'invariants topologiques permet : - une reconstruction ascendante de la scène par agrégation progressive des nœuds B et nœuds N ; - une reconstruction descendante de la scène par redistribution des informations depuis les nœuds N de niveau hiérarchique supérieur vers les nœuds N de niveau inférieur. La hiérarchie de nœuds N constitue un modèle du monde invariant hiérarchiquement, indépendant de toute métrique géométrique. L'invention permet une reconnaissance efficace des objets dans le contexte d'une scène capturée. Cette hiérarchie utilisée par l'applications de perception permet la compréhension, la compression, la reconstruction et le raisonnement automatique du fonctionnement du monde de manière non supervisée

Par ailleurs, on notera que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, l'ordre des étapes pourrait être différent.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé d'analyse (100) d'une image (IMG) de pixels, **caractérisé en ce qu'**il comporte :
- une recherche (102) de blobs (B₂₀₄ - B₂₂₂) dans l'image (IMG) ;
- une recherche (104), pour chaque blob (B₂₀₄ - B₂₂₂), pour chacune de plusieurs relations topologiques prédéfinies, d'un ou plusieurs blobs ayant cette relation topologique avec le blob considéré ; et
- une construction (106) d'un graphe relationnel (G) comportant :
• des nœuds représentant respectivement les blobs (B₂₀₄ - B₂₂₂) trouvés, et
• des liaisons, chaque liaison liant deux nœuds et indiquant la relation topologique entre les deux blobs représentés par les deux nœuds liés.

2. Procédé d'analyse (100) selon la revendication 1, dans lequel les relations topologiques prédéfinies incluent : adjacence et inclusion.

3. Procédé d'analyse (100) selon la revendication 1 ou 2, dans lequel la recherche (102) de blob (B₂₀₄ - B₂₂₂) comporte une recherche de pixels de contour optimum, les pixels de contour optimum délimitant des groupes de pixels pris comme blobs de l'image.

4. Procédé d'analyse (100) selon la revendication 3, dans lequel la recherche (102) de pixels de contour optimum comporte, pour chaque pixel ayant des pixels voisins :
- un calcul d'amplitude de variation de ce pixel par rapport à des valeurs des pixels voisins ; et
- une détermination que l'amplitude de variation est maximale suivant au moins une direction possible avec les pixels voisins, le pixel considéré étant alors considéré comme un pixel de contour optimum.

5. Procédé d'analyse (100) selon l'une quelconque des revendications 1 à 4, dans lequel l'image (IMG) a été préalablement acquise par un dispositif d'acquisition produisant une image, par exemple une caméra ou bien un appareil photo, embarqué dans un drone, un satellite, un robot ou bien une voiture autonome, ou bien déployé dans un espace public ou privé.

6. Procédé d'analyse (600) de plusieurs images successives d'une même scène, comportant :
- une analyse de chaque image par un procédé d'analyse (100) selon l'une quelconque des revendications 1 à 5, pour obtenir autant de graphes relationnels ;
- une détermination d'un sous-graphe (SG) commun aux graphes relationnels ; et
- de manière itérative, en partant du sous-graphe (SG), un regroupement des nœuds dans de nouveaux nœuds hiérarchiques.

7. Procédé d'analyse (600) selon la revendication 6, dans lequel, à chaque itération :
- le ou les nœuds liés à un autre nœud par une liaison d'inclusion, ou par toute relation topologique équivalente, sont regroupés, avec cet autre nœud, dans un nouveau nœud ; et/ou
- le nœud ayant le plus de liaisons topologiques est recherché et ce nœud est regroupé avec tous les autres nœuds auxquels il est lié dans un nouveau nœud.

8. Procédé d'analyse (600) selon la revendication 7, dans lequel chaque nœud de niveau hiérarchique supérieur constitue un invariant hiérarchique, résumant la structure topologique des nœuds de niveau inférieur qu'il regroupe, indépendamment de leur organisation géométrique ou métrique.

9. Procédé de reconnaissance (1300) d'un objet dans une image de pixels, comportant :
- une analyse (1302) de l'image au moyen d'un procédé d'analyse (100) selon l'une quelconque des revendications 1 à 5, pour obtenir un graphe relationnel ;
- une comparaison (1304) du graphe relationnel avec des graphes de référence qui sont caractéristiques d'objets respectifs, pour déterminer si le graphe relationnel est topologiquement similaire à l'un des graphes de référence ; et
- une association (1306) du graphe relationnel avec l'objet **caractérisé par** le graphe de référence similaire.

10. Procédé de reconnaissance (1300) d'un objet dans une suite d'images de pixels, comportant :
- une analyse (1302) de la suite d'images successives au moyen d'un procédé d'analyse (600) selon l'une quelconque des revendications 6 à 8, pour obtenir un graphe hiérarchique ;
- une comparaison (1304) du graphe hiérarchique avec des graphes de référence qui sont caractéristiques d'objets respectifs, pour déterminer si le graphe hiérarchique est structurellement similaire à l'un des graphes de référence ; et
- une association (1306) du graphe hiérarchique avec l'objet **caractérisé par** le graphe de référence similaire.

11. Procédé de vidéosurveillance (1500), comportant :
- une réception (1504) d'une image prise par un dispositif d'acquisition d'image (1402) ;
- une reconnaissance (1506) d'un objet dans l'image au moyen d'un procédé de reconnaissance (1300) selon la revendication 9, pour obtenir un graphe relationnel associé à un objet ; et
- si l'objet fait partie d'une liste prédéfinie d'objets, un envoi (808) d'une alerte.

12. Procédé (1600) de détermination de graphes de référence, comportant :
- pour chacune de plusieurs images de pixels, une analyse (1602) de l'image au moyen d'un procédé d'analyse (100) selon l'une quelconque des revendications 1 à 5, pour obtenir des graphes relationnels ;
- une recherche (1604) de sous-graphes communs à une proportion prédéfinie des graphes relationnels, ces sous-graphes étant pris comme graphes de référence topologiques ; et
- une association (1606) de chaque graphe de référence à un objet.

13. Programme d'ordinateur (1808) téléchargeable depuis un réseau de communication et/ou enregistré sur un support lisible par ordinateur, **caractérisé en ce qu'**il comprend des instructions pour l'exécution des étapes d'un procédé selon l'une quelconque des revendications 1 à 12 lorsque ledit programme est exécuté sur un ordinateur.

14. Dispositif (1400) d'analyse d'une image (IMG) de pixels, **caractérisé en ce qu'**il comporte :
- un module de recherche de blobs (B₂₀₄ - B₂₂₂) dans l'image (IMG) ;
- un module de recherche, pour chaque blob (B₂₀₄ - B₂₂₂), pour chacune de plusieurs relations topologiques prédéfinies, d'un ou plusieurs blobs ayant cette relation topologique avec le blob considéré ; et
- un module de construction d'un graphe relationnel (G) comportant :
• des nœuds représentant respectivement les blobs (B₂₀₄ - B₂₂₂) trouvés, et
• des liaisons, chaque liaison liant deux nœuds et indiquant la relation topologique entre les deux blobs représentés par les deux nœuds liés.
